# EUROPEAN PATENT APPLICATION

(11) **EP 4 627 951 A1**
(43) Date of publication of application: **08.10.2025**
(21) Application number: 22968397.4
(22) Date of filing: 13.12.2022
(51) Int. Cl.: A24F 40/57, A24F 40/50, G06Q 30/0217, G06Q 50/10

(54) **INFORMATION PROCESSING DEVICE, AND INFORMATION PROCESSING METHOD**

(71) Applicant: Japan Tobacco Inc., Tokyo 105-6927 (JP)
(72) Inventor: YAMADA, Manabu, Tokyo 130-8603 (JP)
(74) Representative: Hoffmann Eitle
(86) International application number: PCT/JP2022/045791
(87) International publication number: WO 2024/127485

(57) **Abstract**

[Problem] To provide a mechanism capable of further improving the quality of user experience.

[Solution] This information processing device comprises: a communication unit that sends control information to be used by an inhalation device and receives a use history which is information indicating the history of use of the control information by the inhalation device, the inhalation device heating an aerosol source to generate aerosol, wherein the control information defines a parameter relating to a temperature at which the aerosol source is heated; a storage unit that stores the control information sent by the communication unit and the use history received by the communication unit; and a control unit that calculates, on the basis of the use history stored in the storage unit, a reward given to a user having contributed to the generation of the control information.

## Description

### TECHNICAL FIELD

The present disclosure relates to an information processing device and an information processing method.

### BACKGROUND ART

Inhalation devices that generate substances to be inhaled by a user, such as e-cigarettes and nebulizers, are in widespread use. For example, an inhalation device employs an aerosol source for generating an aerosol, and a substrate including a flavor source or the like for imparting a flavor component to the generated aerosol, to generate an aerosol to which the flavor component has been imparted. The user can enjoy the flavor by inhaling the aerosol to which the flavor component has been imparted, generated by the inhalation device. The action by which the user inhales the aerosol is also referred to below as "puffing" or a "puffing action".

Enjoyment of the flavor (also referred to below as the taste) experienced from puffing varies from user to user. The temperature at which the aerosol source is heated, which directly affects the taste, can therefore preferably be customized by the user. PTL 1 below discloses technology with which a user customizes the temperature at which an aerosol source is heated.

### CITATION LIST

### PATENT LITERATURE

PTL 1: WO 2019/104227 A1

### SUMMARY OF INVENTION

### TECHNICAL PROBLEM

However, the technology according to PTL 1 above is confined to the user customizing the temperature at which the aerosol source is heated, for personal use.

The present disclosure therefore takes account of the problems above, and the objective of the present disclosure lies in providing a mechanism capable of further improving the quality of a user experience.

### SOLUTION TO PROBLEM

One aspect of the present invention for solving the problems above provides an information processing device comprising: a communication unit for sending control information defining parameters relating to a temperature at which an aerosol source is heated, for use by an inhalation device which generates an aerosol by heating the aerosol source, and for receiving a usage history constituting information showing a history of use of the control information by the inhalation device; a memory unit for storing the control information sent by the communication unit and the usage history received by the communication unit; and a control unit for calculating a reward granted to a user who contributed to generating the control information, based on the usage history stored in the memory unit.

The usage history may include at least any one of: the number of substrates containing an aerosol source that were heated on the basis of the control information; the number of puffs taken during heating based on the control information; timing of puffs; and duration of puffs taken during heating based on the control information.

The control unit may calculate the reward granted to a user who contributed to generating the control information, based on a ranking assigned to the control information from a predetermined perspective.

The control unit may determine the ranking of the control information on the basis of at least any of: the usage history of the control information, a history of sending/receiving of the control information, and an evaluation of the control information.

The memory unit may store the sending/receiving history which shows the history of sending/receiving of the control information, and the control unit may calculate the reward granted to a user who contributed to generating the control information, based on the history of sending/receiving of the control information stored in the memory unit.

The history of sending/receiving of the control information may include at least either of the number of times that the control information was sent/received, and the number of users using devices that received the control information.

The control unit may calculate the reward granted to a user who contributed to generating the control information, based on rights relating to generation of the control information which have been granted to a user who contributed to generating the control information.

The control unit may calculate the reward granted to a user who contributed to generating the control information, based on total sales of the control information.

The control unit may determine a selling price of the control information on the basis of: a ranking assigned to the control information from a predetermined perspective, the user who contributed to generating the control information, or the user who is using a device which received the control information.

The inhalation device may use control information received from a device used by another user, and the control unit may calculate the reward granted to said other user who is using the device which was the sender of the control information.

The memory unit may store, in association with each other, the control information, first identification information for identifying a user who contributed to generating the control information, and second identification information for identifying the control information.

Another aspect of the present invention for solving the problems above provides an information processing method comprising: storing control information defining parameters relating to a temperature at which an aerosol source is heated, for use by an inhalation device which generates an aerosol by heating the aerosol source; sending the stored control information; receiving a usage history constituting information showing a history of use of the control information by the inhalation device; storing the received usage history; and calculating, by means of a control unit, a reward granted to a user who contributed to generating the control information, based on the stored usage history.

### ADVANTAGEOUS EFFECTS OF INVENTION

The present disclosure as described above provides a mechanism capable of further improving the quality of a user experience.

### BRIEF DESCRIPTION OF DRAWINGS

Fig. 1 is a view showing a configuration example of a system according to the embodiment.
Fig. 2 is a schematic diagram schematically illustrating a configuration example of an inhalation device.
Fig. 3 is a block diagram showing a configuration example of a terminal device according to the embodiment.
Fig. 4 is a block diagram showing a configuration example of a server according to the embodiment.
Fig. 5 is a graph schematically showing an example of a heating profile.
Fig. 6 is a sequence chart showing an example of an overall processing flow implemented by the system according to the embodiment.
Fig. 7 is a flowchart showing an example of a processing flow for granting a reward, implemented by the server according to the embodiment.
Fig. 8 is a sequence chart showing an example of an overall processing flow implemented by a system according to a first variant example.
Fig. 9 is a diagram to illustrate an example of rights granted to a user.

### DESCRIPTION OF EMBODIMENTS

Preferred embodiments of the present disclosure will be described in detail below with reference to the appended drawings. It should be noted that components having substantially the same functional configuration will be assigned the same reference numbers in the description and drawings to avoid giving a duplicate description.

In this description and the drawings, elements having substantially identical functional configurations may also be distinguished by using the same reference sign followed by a different letter of the alphabet. For example, a plurality of elements having a substantially identical functional configuration are distinguished as an inhalation device 100A and an inhalation device 100B as necessary. However, if there is no need to specifically distinguish between each of the plurality of elements having a substantially identical functional configuration, only the same code is assigned. For example, if it is not necessary to particularly distinguish between the inhalation device 100A and the inhalation device 100B, then the inhalation device is merely referred as the inhalation device 100.

### <1. Configuration example>

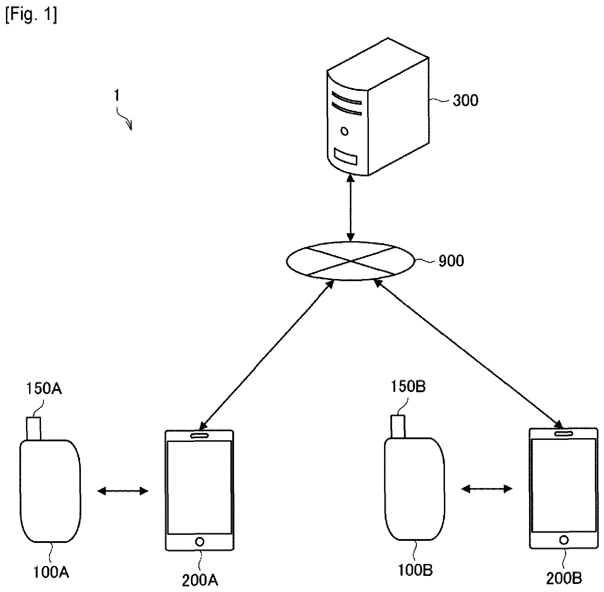

Fig. 1 is a view showing a configuration example of a system 1 according to an embodiment of the present disclosure. As shown in fig. 1, the system 1 includes a plurality of inhalation devices 100 (100A and 100B), a plurality of terminals (200A and 200B), and a server 300.

The inhalation device 100 is a device for generating a substance to be inhaled by a user. Hereinafter, the substance generated by the inhalation device 100 will be described as being an aerosol. The inhalation device 100 is an example of an aerosol generating device that generates an aerosol. Alternatively, the substance generated by the inhalation device 100 may be a gas. The inhalation device 100 can accommodate a stick-type substrate 150. The inhalation device 100 generates the aerosol by using the stick-type substrate 150 accommodated therein. The stick-type substrate 150 is an example of a substrate that contributes to generation of an aerosol. The stick-type substrate 150 contains an aerosol source. The inhalation device 100 generates the aerosol by heating the stick-type substrate 150 accommodated therein.

The terminal device 200 is a device used by a user of the inhalation device 100. The terminal device 200 is associated with the inhalation device 100. The inhalation device 100 and the terminal device 200 may be paired in advance for wireless communication, or the fact that the user of the inhalation device 100 and the terminal device 200 is the same may be registered in the server 300 in advance. The terminal device 200 may be any device such as a smartphone, a tablet terminal, a wearable device, or a personal computer (PC). Alternatively, the terminal device 200 may be a charger that charges the inhalation device 100.

The server 300 is a control device that manages information about each device included in the system 1. The server 300 is connected to the monitoring device 200 via a network 900. In particular, the server 300 indirectly communicates with the inhalation device 100 via the terminal device 200. The server 300 may perform various processing on the basis of information collected from the inhalation device 100 via the terminal device 200. Alternatively, the server 300 may perform various processing on the basis of user operations performed on the terminal device 200.

The system 1 includes a plurality of the inhalation devices 100 and a plurality of the terminal devices 200 used by a plurality of users. As an example, a user who uses the inhalation device 100A and the terminal device 200A is also referred to as user A. A user who uses the inhalation device 100B and the terminal device 200B is also referred to as user B.

### (1) Configuration example of inhalation device

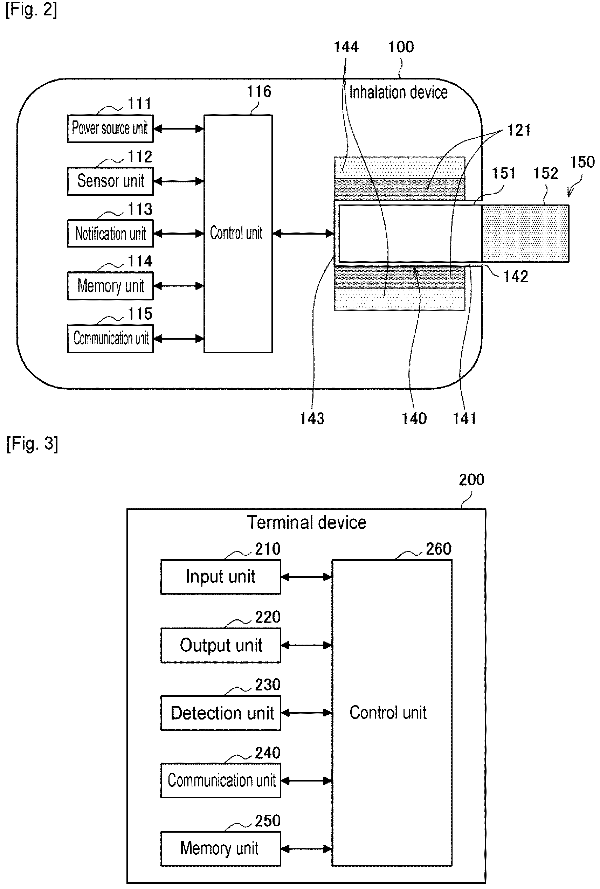

Fig. 2 is a schematic diagram illustrating schematically a configuration example of the inhalation device 100. As illustrated in fig. 2, an inhalation device 100 according to the present configuration example comprises a power source unit 111, a sensor unit 112, a notification unit 113, a memory unit 114, a communication unit 115, a control unit 116, a heating unit 121, an accommodating portion 140, and a heat insulating portion 144.

The power source unit 111 stores electrical power. The power source unit 111 then supplies the electric power to each component of the inhalation device 100 in accordance with control performed by the control unit 116. The power source unit 111 may be configured, for example, by a rechargeable battery such as a lithium ion secondary battery.

The sensor unit 112 acquires various types of information relating to the inhalation device 100. As an example, the sensor unit 112 is configured by a pressure sensor such as a condenser microphone, a flow rate sensor or a temperature sensor, etc., and acquires values associated with inhalation by a user. As another example, the sensor unit 112 is configured by an input device, such as a button or switch, for accepting input of information from the user.

The notification unit 113 notifies the user of information. The notification unit 113 is configured by a light-emitting device which emits light, a display device which displays images, a sound output device which outputs sound, or a vibration device which vibrates, etc., for example.

The storage unit 114 stores various types of information for the operation of the inhalation device 100. The memory unit 114 is configured by a non-volatile storage medium such as a flash memory, for example.

The communication unit 115 is a communication interface capable of performing communication conforming to any wired or wireless communication standard. Examples of communication standards that may be used include standards that employ Wi-Fi (registered trademark), Bluetooth (registered trademark), Bluetooth Low Energy (BLE) (registered trademark), Near-Field Communication (NFC), or Low Power Wide Area (LPWA), for example.

The control unit 116 functions as an arithmetic processing device and a control device, and controls overall operation within the inhalation device 100 in accordance with various programs. The control unit 116 is realized by a CPU (Central Processing Unit) or an electronic circuit such as a microprocessor, for example.

The accommodating portion 140 has an internal space 141, and holds the stick-type substrate 150 while accommodating a portion of the stick-type substrate 150 in the internal space 141. The accommodating portion 140 has an opening 142 allowing the internal space 141 to communicate with the outside, and accommodates the stick-type substrate 150 that has been inserted into the internal space 141 from the opening 142. For example, the accommodating portion 140 is a cylindrical body comprising the opening 142 and a bottom portion 143 serving as a bottom surface, and defines a columnar internal space 141. An air flow path for supplying air to the internal space 141 is connected to the accommodating portion 140. An air inflow hole, which is an inlet for air into the air flow path, is disposed in a side surface of the inhalation device 100, for example. An air outflow hole serving as an outlet for air from the air flow path to the internal space 141 is disposed in the bottom portion 143, for example.

The stick-type substrate 150 comprises a substrate portion 151 and a mouthpiece portion 152. The substrate portion 151 contains an aerosol source. The aerosol source includes a tobacco-derived or non-tobacco-derived flavor component. If the inhalation device 100 is a medical inhaler such as a nebulizer, the aerosol source may include a drug. The aerosol source may, for example, be a liquid such as water or a polyhydric alcohol, for example glycerol or propylene glycol, containing the tobacco-derived or non-tobacco-derived flavor component, or may be a solid including the tobacco-derived or non-tobacco-derived flavor component. In a state in which the stick-type substrate 150 is being held in the accommodating portion 140, at least a portion of the substrate portion 151 is accommodated in the internal space 141, and at least a portion of the mouthpiece portion 152 protrudes from the opening 142. Then, when the user holds the mouthpiece portion 152 protruding from the opening 142 in their mouth and inhales, air flows into the internal space 141 via the air flow path, which is not illustrated in the drawings, and reaches the inside of the user's mouth together with the aerosol generated from the substrate portion 151.

The heating unit 121 heats the aerosol source to atomize the aerosol source, thereby generating the aerosol. In the example shown in fig. 2, the heating unit 121 has a film-like form and is arranged so as to cover the outer circumference of the accommodating portion 140. Then, when the heating unit 121 generates heat, the substrate portion 151 of the stick-type substrate 150 is heated from the outer circumference and an aerosol is generated. The heating unit 121 generates heat when supplied with electricity from the power source unit 111. By way of example, electricity may be supplied when the sensor unit 112 detects that the user has started sucking and/or that predetermined information has been input. The supply of electricity may then be stopped when the sensor unit 112 detects that the user has finished sucking and/or that predetermined information has been input.

The heat insulating portion 144 prevents heat transfer from the heating unit 121 to other components. For example, the heat insulating portion 144 is configured by a vacuum insulating material or an aerogel insulating material, etc.

A configuration example of the inhalation device 100 has been described above. The inhalation device 100 is, of course, not limited to the configuration described above, and may adopt various configurations, such as those illustrated below by way of example.

As one example, the heating unit 121 may have a blade-like form and may be arranged so as to protrude into the internal space 141 from the bottom portion 143 of the accommodating portion 140. In that case, the blade-like heating unit 121 is inserted into the substrate portion 151 of the stick-type substrate 150 and heats the substrate portion 151 of the stick-type substrate 150 from the inside. As another example, the heating unit 121 may be arranged so as to cover the bottom portion 143 of the accommodating portion 140. Furthermore, the heating unit 121 may be configured by a combination of two or more from among a first heating unit covering the outer circumference of the accommodating portion 140, a blade-like second heating unit, and a third heating unit covering the bottom portion 143 of the accommodating portion 140.

As another example, the accommodating portion 140 may comprise an opening/closing mechanism such as a hinge for opening/closing part of a casing that forms the internal space 141. By opening/closing the casing, the accommodating portion 140 may then receive and grip the stick-type substrate 150 which has been inserted into the internal space 141. In that case, the heating unit 121 may be provided on the part of the accommodating portion 140 gripping the stick-type substrate 150, and may heat the stick-type substrate 150 while pressing same.

Furthermore, the means for atomizing the aerosol source is not limited to heating provided by the heating unit 121. For example, the means for atomizing the aerosol source may be induction heating. In that case, the inhalation device 100 comprises at least an electromagnetic induction source such as a coil for generating a magnetic field, instead of the heating unit 121. A susceptor which generates heat by means of induction heating may be provided in the inhalation device 100, or may be contained in the stick-type substrate 150.

It should be noted that the inhalation device 100 collaborates with the stick-type substrate 150 to generate an aerosol to be inhaled by the user. As such, the combination of the inhalation device 100 and the stick-type substrate 150 may be considered as an aerosol-generating system.

### (2) Configuration example of terminal device

Fig. 3 is a block diagram showing a configuration example of the terminal device 200 according to the embodiment. As shown in fig. 3, the terminal device 200 includes an input unit 210, an output unit 220, a detection unit 230, a communication unit 240, a memory unit 250, and a control unit 260.

The input unit 210 has the function of receiving input of various types of information. The input unit 210 may include an input device that receives input of information from the user. Examples of input devices that may be cited include a button, a keyboard, a touch panel, and a microphone, etc. Alternatively, the input unit 210 may include various types of sensors such as an image sensor.

The output unit 220 has the function of outputting information. The output unit 220 may include an output device that outputs information to the user. Examples of output devices that may be cited include: a display device for displaying information, a light-emitting device for emitting light, a vibration device which vibrates, and a sound output device for outputting sound, etc. A display is an example of the display device. A light-emitting diode (LED) is an example of the light-emitting device. An eccentric motor is an example of the vibration device. A speaker is an example of the sound output device. The output unit 220 outputs the information input from the control unit 260 to notify the user of the information.

The detection unit 230 has the function of detecting information relating to the terminal device 200. The detection unit 230 may detect location information of the terminal device 200. For example, the detection unit 230 receives a GNSS (global navigation satellite system) signal from a GNSS satellite (e.g., a GPS signal from a GPS (global positioning system) satellite), and detects location information comprising the longitude and latitude of the device. The detection unit 230 may detect movement of the terminal device 200. For example, the detection unit 230 includes a gyro sensor and an acceleration sensor, and detects an angular velocity and an acceleration.

The communication unit 240 is a communication interface for sending and receiving information between the terminal device 200 and another device. The communication unit 240 performs communication conforming to any wired or wireless communication standard. Examples of communication standards which may be used include standards employing USB (universal serial bus), Wi-Fi (registered trademark), Bluetooth (registered trademark), NFC (near field communication), or LPWA (low-power wide area), etc.

The memory unit 250 stores various types of information. The memory unit 250 is configured by a non-volatile storage medium such as a flash memory, for example.

The control unit 260 functions as an arithmetic processing device or a control device, controlling overall operation within the terminal device 200 in accordance with various programs. The control unit 260 is realized by a CPU (central processing unit) or an electronic circuit such as a microprocessor, for example. The control unit 260 may also include a ROM (read-only memory) for storing programs and computation parameters, etc. which are used, and a RAM (random access memory) for temporarily storing suitably changing parameters, etc. The terminal device 200 implements various types of processing based on control performed by the control unit 260. Examples of processing controlled by the control unit 260 include: processing of information input by means of the input unit 210, output of information by the output unit 220, detection of information by the detection unit 230, sending and receiving of information by the communication unit 240, and storage/reading of information by the memory unit 250. Other processing implemented by the terminal device 200, such as processing based on input of information to each component and information output from each component, are also controlled by means of the control unit 260.

It should be noted that the functions of the control unit 260 may be realized using an application. The application may be pre-installed or downloaded. Furthermore, the functions of the control unit 260 may be realized by means of PWA (progressive web apps).

### (3) Configuration example of server

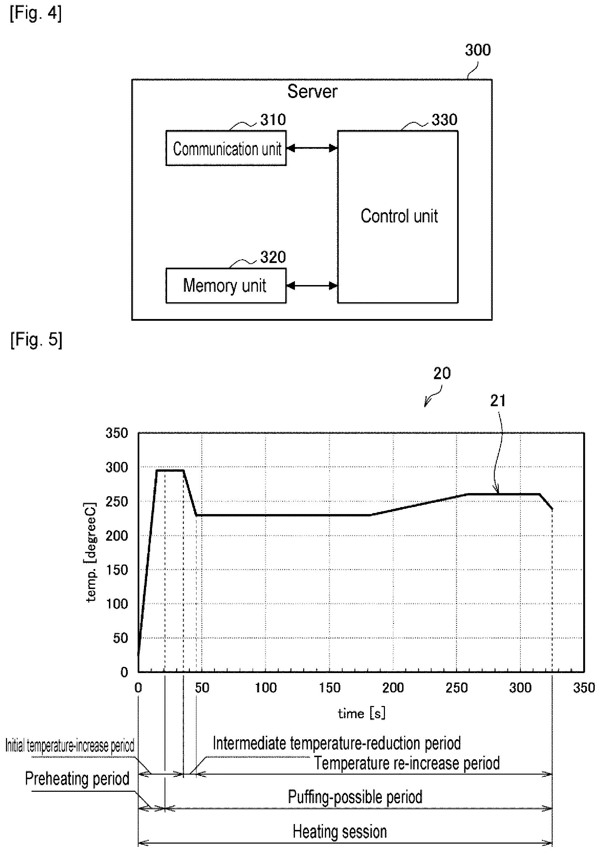

Fig. 4 is a block diagram showing a configuration example of the server 300 according to the embodiment. As shown in fig. 4, the server 300 includes a notification unit 310, a memory unit 320, and a communication unit 330.

The communication unit 310 is a communication interface for sending and receiving information between the server 300 and another device. The communication unit 310 performs communication conforming to any wired or wireless communication standard.

The memory unit 320 stores various types of information for operation of the server 300. The storage unit 320 is constructed of a non-volatile storage medium such as, for example, an HDD (Hard Disk Drive) and an SSD (Solid State Driver).

The control unit 330 functions as an arithmetic processing device and a control device, controlling overall operation within the server 300 in accordance with various programs. The control unit 330 is realized by a CPU (Central Processing Unit) and an electronic circuit such as a microprocessor, for example. The control unit 330 may also include a ROM (read-only memory) for storing programs and computation parameters, etc. which are used, and a RAM (random access memory) for temporarily storing suitably changing parameters, etc. The server 300 implements various types of processing on the basis of control performed by the control unit 330. The sending and receiving of information by the communication unit 310, and storage/reading of information by the memory unit 320 are examples of processing controlled by the control unit 330. Other processing implemented by the server 300, such as processing based on input of information to each component and information output from each component, are also controlled by means of the control unit 330.

### <2. Technical features>

### (1) Heating profile

The control unit 116 controls the operation of the heating unit 121 based on the heating profile. Control of the operation of the heating unit 121 is achieved by controlling the supply of power from the power source unit 111 to the heating unit 121. The heating unit 121 heats the stick-type substrate 150 using power supplied from the power source unit 111.

The heating profile is control information for controlling the temperature at which the aerosol source is heated. The heating profile defines a parameter relating to a temperature at which the aerosol source is heated. The temperature of the heating unit 121 is an example of the temperature at which the aerosol source is heated. A target value of the temperature of the heating unit 121 (also referred to below as the "target temperature") is an example of a parameter relating to the temperature at which the aerosol source is heated. The temperature of the heating unit 121 may be controlled to change in accordance with the time elapsed from the start of heating. In this case, the heating profile includes information defining a time-series transition of the target temperature. As another example, the heating profile may comprise a parameter (hereinafter also referred to as a power supply parameter) defining how power is supplied to the heating unit 121. The power supply parameters include, for example, a voltage applied to the heating unit 121, ON/OFF of the power supply to the heating unit 121, or a method of feedback control to be employed. ON/OFF of the power supply to the heating unit 121 may be considered as ON/OFF of the heating unit 121.

The control unit 116 controls the operation of the heating unit 121 such that the temperature of the heating unit 121 (also referred to below as the "actual temperature") transitions similarly to the target temperature defined in the heating profile. The heating profile is typically designed such that, when the user inhales the aerosol generated from the stick-type substrate 150, the flavour tasted by the user is optimized. Thus, by controlling the operation of the heating unit 121 based on the heating profile, the flavor tasted by the user can be optimized.

The temperature control of the heating unit 121 can be achieved by known feedback control, for example. The feedback control may be a Proportional-Integral-Differential Controller (PID) control, for example. The control unit 116 may cause power from the power supply unit 111 to be supplied to the heating unit 121 in the form of pulses by pulse width modulation (PWM) or pulse frequency modulation (PFM). In that case, the control unit 116 can perform temperature control of the heating unit 121 by adjusting the frequency or the duty ratio of the power pulse in feedback control. Alternatively, the control unit 116 may perform simple ON/OFF control in feedback control. For example, the control unit 116 may perform heating by the heating unit 121 until the actual temperature reaches the target temperature, interrupt heating by the heating unit 121 when the actual temperature reaches the target temperature, and resume heating by the heating unit 121 when the actual temperature falls below the target temperature.

The temperature of the heating unit 121 can be quantified by measuring or estimating the electrical resistance value of the heating unit 121 (a heating resistive element constituting the heating unit 121, to be more precise), for example. This is because the electrical resistance value of the heating resistive element varies with temperature. The electrical resistance value of the heating resistive element can be estimated by measuring the amount of voltage drop at the heating resistive element, for example. The amount of voltage drop at the heating resistive element can be measured by a voltage sensor measuring a potential difference applied to the heating resistive element. In another example, the temperature of the heating unit 121 can be measured by a temperature sensor such as a thermistor installed near the heating unit 121.

The period from the start of the process of generating an aerosol using the stick-type substrate 150 to the end is also referred to hereinafter as a heating session. In other words, a heating session is a period of time during which the operation of the heating unit 121 is controlled based on the heating profile. The beginning of the heating session is the timing at which heating based on the heating profile is started. The end of the heating session is the timing at which a sufficient amount of aerosol is no longer generated. The heating session comprises a first-half preheating period and a second-half puffing-possible period. The puffing-possible period is the period of time during which a sufficient amount of aerosol is expected to be generated. The preheating period is the period from when heating is started until the puffing-possible period is started. Heating performed in the preheating period is also referred to as preheating.

The notification unit 113 may notify the user of information indicative of the timing at which the preheating ends. For example, the notification unit 113 notifies the user of information announcing the end of the preheating period before the preheating period ends, or notifies the user of information indicating that the preheating has ended at the timing at which the preheating has ended. The notification to the user can be by lighting an LED or vibrating, or the like, for example. By referring to such notification, the user is able to take a puff immediately after the end of the preheating.

Similarly, the notification unit 113 may notify the user of information indicative of when the puffing-possible period ends. For example, the notification unit 113 notifies the user of information announcing the end of the puffing-possible period before the puffing-possible period ends, or notifies the user of information indicating that the puffing-possible period has ended at the timing at which the puffing-possible period has ended. The notification to the user can be by lighting an LED or vibrating, or the like, for example. By referring to such notification, the user is able to take a puff until the end of the puffing-possible period.

An example of the heating profile will be described with reference to fig. 5. Fig. 5 is a graph schematically showing an example of a heating profile. The horizontal axis of the graph 20 denotes time. The vertical axis of the graph 20 denotes temperature. The line 21 denotes a time-series transition of the target temperature. As shown in fig. 5, the heating session may include an initial temperature-increase period, an intermediate temperature-reduction period, and a temperature re-increase period in succession. The initial temperature-increase period is a period in which the temperature of the heating unit 121 rapidly rises after the start of heating and is kept at a high temperature. The intermediate temperature-reduction period is a period in which the temperature of the heating unit 121 drops after the initial temperature-increase period. The temperature re-increase period is a period in which the temperature of the heating unit 121 is once again increased after the intermediate temperature-reduction period. In the example shown in fig. 5, the target temperature rapidly increases to around 300°C during the initial temperature-increase period, then drops to around 230°C during the intermediate temperature-reduction period, after which the temperature increases stepwise to around 260°C during the temperature re-increase period. During the intermediate temperature-reduction period, electrical supply to the heating unit 121 may be interrupted and heating may be turned OFF. In the example shown in fig. 5, the period from the start of heating to partway through the initial temperature-increase period is the preheating period, and the period from part way through the initial temperature-increase period to the end of the temperature re-increase period is the puffing-possible period.

### (2) Customization of heating profile

The terminal device 200 controls customization processing. Customization processing is processing to customize the heating profile used by the inhalation device 100. Customizing the heating profile means generating a heating profile which achieves a preferred taste by applying changes based on an existing heating profile. The user repeatedly customizes the heating profile and checks the taste by trying the customized heating profile. The terminal device 200 repeatedly performs the customization processing by generating a heating profile to achieve the taste that the user hopes for. By repeating the customization processing, the heating profile can gradually be brought closer to the ideal heating profile for achieving the taste that the user hopes for.

The customization processing comprises the terminal device 200 receiving a target temperature setting from the user. As an example, the terminal device 200 may receive a setting for a target temperature at the timing of each puff. The terminal device 200 generates a customized heating profile by modifying the target temperature of an uncustomized heating profile on the basis of the settings from the user.

The customization processing comprises the terminal device 200 sending the customized heating profile to the inhalation device 100. The inhalation device 100 stores the received heating profile to be used for the next heating.

The customization processing may comprise the terminal device 200 receiving a taste evaluation setting from the user. In particular, the terminal device 200 may receive a setting for an evaluation of the aerosol generated on the basis of the customized heating profile. This allows the user to evaluate the effect which their customization has had on the taste.

For example, the terminal device 200 receives a taste evaluation setting from the user during a heating session, that is, while the inhalation device 100 is implementing heating based on the heating profile. In this case, the user takes a puff each time the puff timing is reached, and sets a taste evaluation in the terminal device 200. After the heating session has ended, the terminal device 200 then receives a target temperature setting while displaying the taste evaluation. This enables the user to set the target temperature while referring to the taste evaluation which was set during the heating session.

It should be noted that, in order to simplify the description below, operations governed by the inhalation device 100 or the terminal device 200 may be described as being governed by the user who is using that inhalation device 100 or terminal device 200. As an example, the terminal device 200 generating a heating profile on the basis of a user operation will also be referred to as the user generating a heating profile. As another example, the inhalation device 100 which is using the heating profile will also be referred to as the user who is using the heating profile. Furthermore, a user who contributed to generating a heating profile by setting target temperatures and setting taste evaluations will also be referred to below simply as a user who generated a heating profile.

### (3) Heating profile ecosystem

The system 1 constructs an ecosystem that enables a heating profile generated by one user to also be used by other users.

As an example, the server 300 receives uploads of user-generated heating profiles. The server 300 operates a web page where heating profiles uploaded from users are available to download. Users are able to download heating profiles generated by other users by downloading the heating profiles from this web page. The server 300 may receive evaluations from users who downloaded and used a heating profile, and may also display such evaluations as online reviews on the web page. The server 300 may also sell user-generated heating profiles and return a reward commensurate with sales to the users who generated the heating profiles.

This configuration enables high-quality user-generated heating profiles to be disseminated to many users. More users will also be motivated to generate heating profiles, making it possible to provide users with even more high-quality heating profiles as a result. Satisfaction levels can thus be improved for all users.

### (4) Heating profile upload

The user uploads a generated heating profile to the server 300. More specifically, the terminal device 200 sends the generated heating profile to the server 300. The server 300 receives the heating profile from the terminal device 200 and stores the received heating profile. At this point, the server 300 stores the heating profile after adding meta-information.

The meta-information added to the heating profile by the server 300 during the upload includes identification information for identifying the user who generated the heating profile (corresponding to first identification information). The identification information for identifying the user is also referred to below as a user ID. The user ID of the user who generated the heating profile is also referred to as the generating user ID in particular.

The meta-information added to the heating profile by the server 300 during the upload includes identification information for identifying the heating profile (corresponding to second identification information). The identification information for identifying the heating profile is also referred to below as a profile ID.

The server 300 thus stores, in association with each other, the heating profile, the generating user ID serving as meta-information, and the profile ID serving as meta-information. As will be described later, this enables a reward to be granted to a user who generated a heating profile.

It should be noted that a user who contributed to uploading a heating profile, such as a user who operated the terminal device 200 in order to upload the heating profile, will also be referred to below simply as the user who uploaded the heating profile.

### (5) Heating profile download

The user downloads a heating profile generated by another user from the server 300. More specifically, the server 300 first of all sends the heating profile to the terminal device 200. On receiving the heating profile, the terminal device 200 sends the received heating profile to the inhalation device 100. The inhalation device 100 stores the received heating profile for subsequent use in heating the stick-type substrate 150.

The inhalation device 100 generates a usage history when using a heating profile. The inhalation device 100 then sends the usage history to the terminal device 200. On receiving the usage history, the terminal device 200 sends the received usage history to the server 300. On receiving the usage history, the server 300 stores the received usage history. This enables the server 300 to ascertain how the downloaded heating profile was used.

The heating profile usage history includes the user ID of the user of the inhalation device 100 which used the heating profile. For example, the inhalation device 100 adds a user ID which is preset for that inhalation device 100 to the usage history.

The heating profile usage history includes the profile ID of that heating profile. For example, the inhalation device 100 acquires the profile ID of the heating profile from the meta-information added to that heating profile, and adds this profile ID to the usage history.

The heating profile usage history may include the number of stick-type substrates heated on the basis of the relevant heating profile (this will also be referred to below as the number of sticks consumed). For example, the inhalation device 100 detects, as the number of sticks consumed, the number of times heating based on the heating profile was performed, and adds this number to the usage history.

The heating profile usage history may include the number of times puffs were taken during heating based on the relevant heating profile (this will also be referred to below as the number of puffs). For example, the inhalation device 100 detects, as the number of puffs, the number of times a value associated with puffing was detected during a heating session by means of a pressure sensor, flow rate sensor or temperature sensor, etc. included in the sensor unit 112, and then adds this number to the usage history.

The heating profile usage history may include information indicating the timing of puffs taken during heating based on the relevant heating profile. For example, the inhalation device 100 detects, as the timing of puffs, the timing at which a value associated with puffing was detected during a heating session by means of a pressure sensor, flow rate sensor or temperature sensor, etc. included in the sensor unit 112, and then adds this information indicating the timing of puffs to the usage history. The information indicating the timing of puffs should be information identifying the timing of puffs by the time elapsed from the start of heating.

The heating profile usage history may include the duration of puffs taken during heating based on the relevant heating profile (this will also be referred to below as the puff duration). For example, the inhalation device 100 detects, as the puff duration, the length of a period during which a value associated with puffing was detected in a heating session by means of a pressure sensor, flow rate sensor or temperature sensor, etc. included in the sensor unit 112, and then adds this length to the usage history.

The inhalation device 100 may send the usage history to the terminal device 200 each time heating based on a heating profile is performed. Alternatively, the inhalation device 100 may collect usage histories, which may then be sent to the terminal device 200 at a predetermined timing. Examples of a predetermined timing include a timing at which communication is established between the inhalation device 100 and the terminal device 200, and a timing at which the terminal device 200 requests sending of the usage history.

The terminal device 200 may forward the received usage history to the server 300 each time the usage history is received from the inhalation device 100. Alternatively, the terminal device 200 may collect usage histories received from the inhalation device 100, which may then be sent to the server 300 at a predetermined timing. Examples of a predetermined timing include a timing at which communication is established between the terminal device 200 and the server 300, and a timing at which the server 300 requests sending of the usage history.

It should be noted that a user who contributed to downloading a heating profile, such as a user who operated the terminal device 200 in order to download the heating profile, will also be referred to below simply as the user who downloaded the heating profile.

### (6) Granting of reward to users who generated heating profile

The server 300 grants a reward to users who generated a heating profile. As an example, the server 300 calculates a reward granted to a user who generated a heating profile, based on the stored usage history. The server 300 then grants the calculated reward to the user. Points which can be used to purchase a heating profile published on the web page are an example of a reward. For example, the server 300 stores a user ID in association with points serving as the reward. This allows the user to pay the purchase price using the awarded points when the user downloads a heating profile from the web page.

As an example, the server 300 may calculate a reward granted to a user by multiplying the unit cost by a number indicated by the usage history. The method for calculating this reward will be described in detail below.

The server 300 first of all calculates the heating profile-based reward. As an example, the server 300 may aggregate the number of sticks consumed by collecting usage histories including the same profile ID, and may calculate, as the heating profile-based reward, a value obtained by multiplying the unit cost by the aggregated total number of sticks consumed. As another example, the server 300 may aggregate the number of puffs by collecting usage histories including the same profile ID, and may calculate, as the heating profile-based reward, a value obtained by multiplying the unit cost by the aggregated total number of puffs. As another example, the server 300 may aggregate the puff durations by collecting usage histories including the same profile ID, and may calculate, as the heating profile-based reward, a value obtained by multiplying the unit cost by the aggregated total of puff durations. These calculation methods may be combined, of course. For example, the heating profile-based reward may be calculated by adding together the rewards calculated by these calculation methods.

The server 300 then calculates the user-based reward. For example, the server 300 may calculate a value obtained by aggregating the heating profile-based rewards for heating profiles including the same generating user ID in the meta-information, as the reward granted to the user corresponding to the relevant generating user ID.

This configuration enables a large reward to be granted to users who generated a heating profile frequently used by other users. Users can therefore be motivated to generate heating profiles used more frequently. As a result, it is expected that more and better heating profiles will be uploaded and available for download. The quality of the user experience can thus be improved for all users.

### (7) Processing flow

### - Overall processing

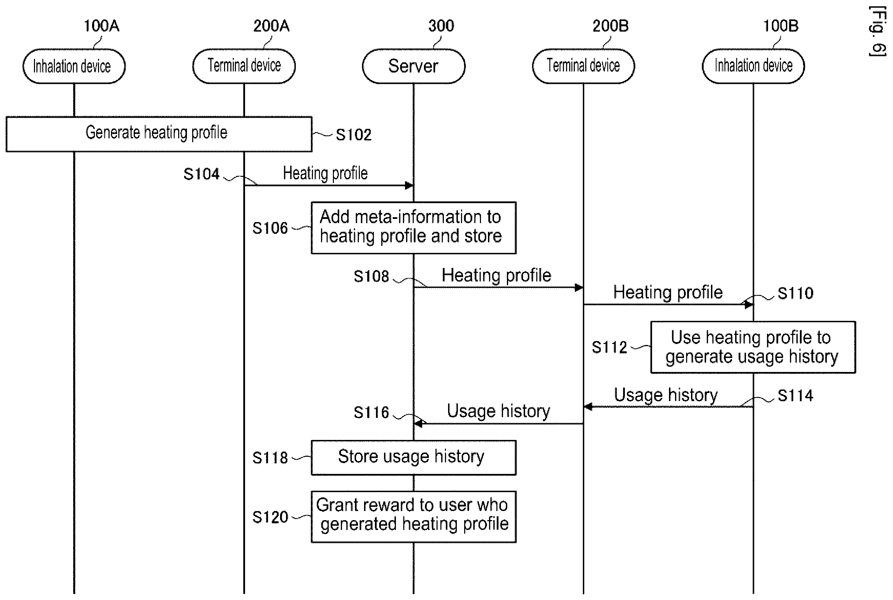

Fig. 6 is a sequence chart showing an example of an overall processing flow implemented by the system 1 according to the embodiment. This sequence involves the inhalation devices 100A and 100B, the terminal devices 200A and 200B, and the server 300. It is assumed here that user A generates a heating profile, and user B uses the heating profile generated by user A.

As shown in fig. 6, the inhalation device 100A and the terminal device 200A first of all generate a heating profile (step S102). For example, the inhalation device 100A and the terminal device 200A generate the heating profile while repeatedly modifying the target temperature and heating the stick-type substrate 150 based on a heating profile reflecting the modified target temperature.

Next, the terminal device 200A sends the generated heating profile to the server 300 (step S104).

The server 300 stores the received heating profile after adding meta-information (step S106). For example, the server 300 adds the user ID of user A to the received heating profile as a generating user ID, and assigns a profile ID. Note that from this step and onward, it may be assumed that meta-information is added to the heating profiles which are sent and received.

Next, the server 300 sends the heating profile to the terminal device 200B (step S108). For example, the terminal device 200B downloads the heating profile generated by user A from the web page operated by the server 300.

The terminal device 200B then sends the received heating profile to the inhalation device 100B (step S110).

Next, the inhalation device 100B generates a usage history using the received heating profile (step S112). For example, the inhalation device 100B generates and stores a usage history including the number of sticks consumed, the number of puffs, and the puff durations.

The inhalation device 100B then sends the usage history to the terminal device 200B (step S114).

Next, the terminal device 200B sends the received usage history to the server 300 (step S116).

The server 300 stores the received usage history (step S118).

The server 300 then grants a reward to the user who generated the heating profile (step S120). For example, the server 300 grants a reward to user A on the basis of the usage history collected from the inhalation device 100B. The server 300 may, of course, also receive usage histories of the heating profile generated by user A from devices other than the inhalation device 100B. In that case, the server 300 grants a reward to user A on the basis of the plurality of usage histories collected.

### - Processing to grant reward

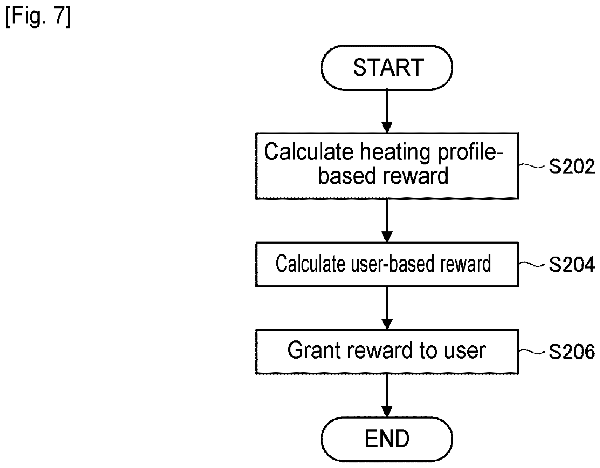

Fig. 7 is a flowchart showing an example of a processing flow for granting a reward, implemented by the server 300 according to the embodiment.

As shown in fig. 7, the server 300 first of all calculates the heating profile-based reward (step S202). For example, the server 300 aggregates usage histories having the same profile ID in order to obtain the total number of sticks consumed, the total number of puffs, and the total of puff durations. The server 300 then calculates, as the heating profile-based reward, a reward obtained by adding together the values of the unit cost multiplied by each of the total number of sticks consumed, the total number of puffs, and the total of puff durations.

Next, the next, the server 300 calculates the user-based reward (step S204). For example, the server 300 calculates a value obtained by aggregating the heating profile-based rewards for heating profiles including the same generating user ID in the meta-information, as the reward granted to the user corresponding to that generating user ID.

The server 300 then grants the user-based reward calculated in step S204 to the user (step S206).

### <3. Variant examples>

### (1) First variant example

The embodiment above described an example in which the terminal device 200 downloads a heating profile from the server 300, but the present disclosure is not limited to such an example. Heating profiles may also be downloaded directly between users. That is to say, the user may download a heating profile from another user without the server 300 as an intermediary. It is conceivable that a heating profile will be downloaded directly between users in a usage case where one user recommends a popular heating profile to another user.

### - Heating profile upload

The terminal device 200 uploads a generated heating profile to the server 300, as described in the embodiment above. After adding meta-information, the server 300 stores the heating profile which was uploaded from the terminal device 200.

The server 300 also sends, to the uploading terminal device 200, the heating profile to which meta-information has been added. In this case, the terminal device 200 stores the heating profile to which meta-information has been added. Alternatively, the server 300 may send the meta-information to the uploading terminal device 200. In this case, the terminal device 200 adds the received meta-information to the heating profile, which is then stored.

### - Heating profile download

The user downloads a heating profile from another user for use. As an example, the terminal device 200B may download a heating profile from the terminal device 200A. In this case, the terminal device 200B sends, to the inhalation device 100B, the heating profile downloaded from the terminal device 200A. The inhalation device 100B stores the received heating profile for subsequent use in heating the stick-type substrate 150.

A usage history is generated when the inhalation device 100 uses a heating profile downloaded from another user, in the same way as when a heating profile is downloaded from the server 300. The generated usage history is sent to the server 300 from the inhalation device 100 via the terminal device 200, and is stored by means of the server 300. This enables the server 300 to ascertain how the heating profile downloaded between users was used.

Here, the meta-information including the profile ID is added to the heating profile downloaded by one user from another user. The inhalation device 100 is therefore capable of generating a usage history including the profile ID. This enables usage histories to be aggregated on the basis of the profile ID.

It should be noted that heating profiles sent by the terminal device 200 are not limited to heating profiles generated by the user of the terminal device 200. The terminal device 200 may also send a heating profile downloaded from the server 300, or may also send a heating profile downloaded from another user.

Furthermore, the route by which heating profiles are downloaded is not limited to terminal device 200 - terminal device 200. As an example, the terminal device 200B may download a heating profile from the inhalation device 100A. As another example, the inhalation device 100B may download a heating profile from the terminal device 200A. As another example, the inhalation device 100B may download a heating profile from the inhalation device 100A.

### - Granting of reward to users who generated heating profile

The server 300 grants a reward to users who generated a heating profile. As described in the embodiment above, the server 300 grants a reward to a user who generated a heating profile, based on collected usage histories. In particular, the server 300 calculates the reward granted to a user, based on usage histories of the heating profile which was downloaded between users, in addition to usage histories of the heating profile which was downloaded from the server 300. This configuration enables a large reward to be granted to users who generated a heating profile frequently used by other users, regardless of the route by which the heating profile was downloaded.

### - Granting of reward to users who disseminated heating profile

In addition, when a user downloads a heating profile from another user, the server 300 may grant a reward to the other user who is using the device which was the sender of the heating profile. As an example, when the terminal device 200B downloads a heating profile from the terminal device 200A, the server 300 may grant a reward to user A who is using the terminal device 200A. At this time, the server 300 may calculate the reward granted to user A by multiplying the unit cost by the number of times that user A was the sender.

This configuration enables a reward to be granted to a user who contributed to disseminating a heating profile. Users will therefore be motivated to disseminate popular heating profiles to other users, enabling more users to enjoy high-quality heating profiles as a result. Satisfaction levels can thus be improved for all users.

### - Processing flow

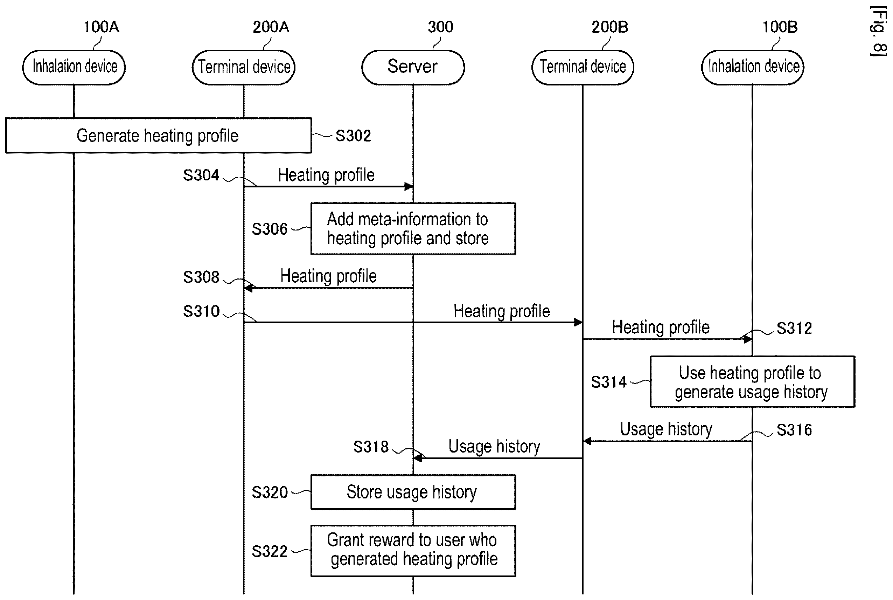

Fig. 8 is a sequence chart showing an example of an overall processing flow implemented by the system 1 according to the first variant example. This sequence involves the inhalation devices 100A and 100B, the terminal devices 200A and 200B, and the server 300. It is assumed here that user A generates a heating profile, and user B uses the heating profile generated by user A.

The processing relating to steps S302-S306 is the same as the processing relating to steps S102-S106 described with reference to fig. 6.

After step S306, the server 300 sends to the terminal device 200A the heating profile to which meta-information has been added (step S308). The terminal device 200A stores the received heating profile.

After this, the terminal device 200A sends the heating profile to the terminal device 200B (step S310). As an example, it is conceivable that the heating profile being sent from the terminal device 200A to the terminal device 200B will take place by way of a conversation in which the heating profile generated by user A is recommended to user B.

The processing relating to steps S312-S322 is the same as the processing relating to steps S110-S120 described with reference to fig. 6.

### (2) Second variant example

The embodiment above described an example in which a reward is granted on the basis of the usage history of the heating profile, but the present disclosure is not limited to such an example. A reward may also be granted on the basis of a sending/receiving history, which shows the history of sending/receiving of the heating profile, instead of or as well as the usage history of the heating profile. Here, the general idea of sending/receiving of the heating profile includes the heating profile being downloaded from the server 300 and the heating profile being downloaded from a device (e.g., the terminal device 200) used by another user. The heating profile sending/receiving history will also be referred to below as the download history.

The heating profile download history may include the number of times that the heating profile has been sent/received (i.e., downloaded) (this will also be referred to below as the number of downloads). The server 300 counts the number of times the heating profile has been downloaded from the server 300 as the number of downloads. The server 300 also counts and stores the number of times the heating profile has been downloaded between users as the number of downloads. As an example, when the server 300 has received a usage history from a terminal device 200 which did not download the heating profile from the server 300, that terminal device 200 may be deemed to have downloaded the heating profile from another user, and may be counted among the number of downloads.

The heating profile download history may include the number of users using a device (e.g., the terminal device 200) which downloaded the heating profile (this number of users will also be referred to below as the number of downloading users). It may also be possible to set an upper limit to the number of times that the heating profile can be used, in which case use of the heating profile may no longer be possible when the upper limit to the number of times of use has been reached. Users wishing to continue using the heating profile then once again download the same heating profile. The number of downloads and the number of downloading users may thus not be matching.

The server 300 stores the heating profile download history in association with the relevant heating profile. The server 300 then grants a reward to the user who generated the heating profile, based on the download history of that heating profile. For example, the server 300 may calculate the reward granted to the user by multiplying the unit cost by the number indicated by the heating profile download history. The method for calculating this reward will be described in detail below.

The server 300 first of all calculates the heating profile-based reward. As an example, the server 300 may calculate, as the heating profile-based reward, a value obtained by multiplying the unit cost by the number of downloads of the heating profile. As another example, the server 300 may calculate, as the heating profile-based reward, a value obtained by multiplying the unit cost by the number of downloading users of the heating profile. These calculation methods may be combined, of course. For example, the heating profile-based reward may be calculated by adding together the rewards calculated by these calculation methods.

The server 300 then calculates the user-based reward. For example, the server 300 may calculate a value obtained by aggregating the heating profile-based rewards for heating profiles including the same generating user ID in the meta-information, as the reward granted to the user corresponding to that generating user ID.

By means of this configuration, a higher reward is granted to users who generated a heating profile with more downloads. Users can therefore be motivated to generate heating profiles with more downloads. Better heating profiles are generated and a better quality of user experience will be expected for all users as a result.

### (3) Third variant example

In the example described above, the reward granted to the user is calculated by multiplying the unit cost by the number indicated by the heating profile usage history or download history. The unit cost may be fixed or may vary.

As an example, the server 300 may set the unit cost for calculating the reward granted to a user who generated a heating profile, based on the usage history of that heating profile. For example, the server 300 may set a higher unit cost for a greater number of sticks consumed, a greater number of puffs, or longer puff durations. Specifically, the server 300 may set the unit cost at 1.5 times the default when the number of sticks consumed exceeds 5000, and may set the unit cost at 2.0 times the default when the number of sticks consumed exceeds 10,000. This configuration can motivate users to generate heating profiles with more downloads, that is, heating profiles liked by more users. Better heating profiles are generated and a better quality of user experience will be expected for all users as a result.

As another example, the server 300 may set the unit cost for calculating the reward granted to a user who generated a heating profile, based on the download history of that heating profile. For example, the server 300 may set a higher unit cost for a greater number of downloads or a greater number of downloading users. Specifically, the server 300 may set the unit cost at 1.5 times the default when the number of downloads exceeds 5000, and may set the unit cost at 2.0 times the default when the number of downloads exceeds 10,000. This configuration can motivate users to generate heating profiles downloaded by more users, that is, heating profiles liked by more users. Better heating profiles are generated and a better quality of user experience will be expected for all users as a result.

### (4) Fourth variant example

The embodiments above described an example in which the terminal device 200 generates heating profiles, but the present disclosure is not limited to such an example. The server 300 may also generate heating profiles.

As an example, customization processing may comprise the terminal device 200 receiving a taste evaluation setting, and sending the received taste evaluation to the server 300. In this case, the server 300 customizes the heating profile on the basis of the received taste evaluation, and sends the customized heating profile to the terminal device 200.

As another example, customization processing may comprise the terminal device 200 receiving a taste evaluation setting, then receiving a user operation to instruct raising, lowering or maintaining of a target temperature, and sending this instruction to the server 300. In this case, the server 300 customizes the heating profile on the basis of the received instruction, and sends the customized heating profile to the terminal device 200.

The server 300 may accumulate or learn correspondence relationships between target temperatures and taste evaluations set by the user. The server 300 may then modify the target temperature on the basis of the learned correspondence relationship so that the taste evaluation is improved. This configuration makes it possible to easily generate a heating profile which achieves the taste that the user hopes for, even if the user is unfamiliar with customizing heating profiles. It should be noted that machine learning technology such as deep learning or an SVM (support vector machine) may be used for learning correspondence relationships.

### (5) Fifth variant example

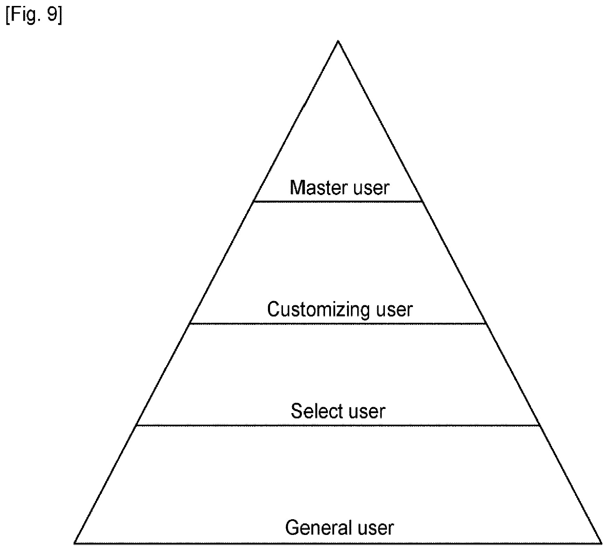

The user may be granted rights relating to heating profiles. A user having greater rights may enjoy a higher degree of freedom in using or generating heating profiles. The rights granted to the user will be described with reference to fig. 9.

Fig. 9 is a diagram to illustrate an example of the rights granted to a user. As shown in fig. 9, users are classified, in order from the user granted the fewest rights, as: general user, select user, customizing user, or master user. The rights granted to a general user will also be referred to as general rights. The rights granted to a select user will also be referred to as select rights. The rights granted to a customizing user will also be referred to as customizing rights. The rights granted to a master user will also be referred to as master rights. The server 300 may grant the user rights on the basis of various information, such as a record of the user who is using the inhalation device 100, a record of generating heating profiles, or user requests.

A general user is a user having rights enabling use of a default heating profile. The default heating profile is the heating profile pre-installed on the inhalation device 100, for example. A select user is a user having rights enabling use of heating profiles generated by other users, in addition to the rights of a general user. A customizing user and a master user are users having rights enabling customization (i.e., generation) of heating profiles, in addition to the rights of a select user.

A general user and a select user may have simple enjoyment of the taste by using existing heating profiles. Meanwhile, a customizing user and a master user may experience the satisfaction of enjoying creating heating profiles to achieve a good flavor. Each user can thus be provided with the experience they desire, by varying the rights granted to each user.

Here, a master user has various privileges which a customizing user does not have, such as the ability to generate heating profiles with a higher degree of freedom than a customizing user. A master user is a user considered by other users who customize heating profiles to have a good sense of generating particularly high-quality heating profiles. A master user also refers to a user having greater experience of generating heating profiles than customizing users. By giving master users various privileges, users can be motivated to generate a large number of high-quality heating profiles. Better heating profiles are generated and a better quality of user experience will be expected for all users as a result.

The server 300 stores users and rights granted to users in association with each other. For example, the server 300 stores the user ID of the user in association with the rights granted to that user. The terminal device 200 may also store the rights granted to the user of the terminal device 200.

The terminal device 200 and/or the server 300 implements processing relating to heating profile generation commensurately with the rights granted to the user of the terminal device 200. More specifically, the terminal device 200 and/or the server 300 performs different processing according to whether the user who generates the heating profile is a master user or a customizing user. For example, the terminal device 200 or the server 300 provides a method of customization with a high degree of freedom to a master user, and provides a method of customization with a low degree of freedom to a customizing user. As one example, a master user may set a target temperature, and the terminal device 200 may generate a heating profile on the basis of the target temperature set by the master user. Meanwhile, a customizing user may go as far as setting a taste evaluation, and the server 300 may generate a heating profile on the basis of the taste evaluation set by the customizing user. Methods of customization with a higher degree of freedom involve more work for the user in customizing the heating profile, and methods of customization with a lower degree of freedom involve less work. This configuration therefore allows a customizing user to customize heating profiles easily. On the other hand, a master user is able to seek the ideal heating profile while also enjoying more work in customizing the heating profile. Furthermore, a master user may also be able to obtain special information which is helpful for creating heating profiles. As an example, a master user may be able to obtain the results of evaluations by other users of heating profiles which the master user has created himself or herself. The evaluation results may be the results of an evaluation by evaluated items, or the results of an evaluation by brand of stick-type substrate 150 used in the heating profile. Furthermore, a master user may also be able to obtain the timings of puffs of other users for when those other users have used heating profiles which that master user has created himself or herself. Furthermore, a master user may also be able to obtain, in advance, information relating to brands of stick-type substrates 150 which are not yet on sale, or heating profiles for use with those stick-type substrates 150 which are not yet on sale. Furthermore, a master user may also be able to add special information to heating profiles created. As an example, a master user may be able to add information relating to puff timings recommended for the heating profile created, or comments on each puff, etc. A customization experience suited to each user can thus be provided by providing methods of customization commensurate with the rights granted.

The server 300 may also calculate the reward granted to a user who generated a heating profile, based on the rights relating to generation of heating profiles granted to the user who generated that heating profile. As an example, the server 300 may set the unit cost for calculating the reward granted to a user who generated a heating profile, based on whether the user who generated the heating profile is a master user or a customizing user. Specifically, the server 300 may set a high unit cost when the user who generated the heating profile is a master user, and may set a low unit cost when the user who generated the heating profile is a customizing user. This configuration can motivate customizing users to gain promotion to master user. Better heating profiles are generated and a better quality of user experience will be expected for all users as a result.

### (6) Sixth variant example

The server 300 may assign a ranking to heating profiles from a predetermined perspective. That is to say, the server 300 may rank heating profiles generated and uploaded by users.

The server 300 may assign a ranking to a heating profile on the basis of the usage history of that heating profile. As an example, the server 300 may assign a higher ranking in order from heating profiles having a greater number of sticks consumed, a greater number of puffs, and/or longer puff durations.

The server 300 may determine the ranking of a heating profile on the basis of the download history of that heating profile. As an example, the server 300 may assign a higher ranking in order from heating profiles having a greater number of downloads and/or a greater number of downloading users

The server 300 may determine the ranking of a heating profile on the basis of evaluations of that heating profile. The server 300 may receive evaluations from users who downloaded and used the heating profile, and may also display such evaluations as online reviews on the web page where the heating profile is available to download. The server 300 may may then assign a higher ranking in order from heating profiles having a higher evaluation.

An example of evaluation criteria for determining ranking was described above. The server 300 may assign a ranking to heating profiles by combining two or more of these evaluation criteria.

The server 300 may display heating profiles according to their assigned ranking on the web page where the heating profiles are available to download. In that case, heating profiles with a higher ranking are easier to download.

The server 300 may also calculate the reward granted to a user who generated a heating profile, based on the the ranking of that heating profile. As an example, the server 300 may set a higher unit cost for a higher ranking. Specifically, the server 300 may set the unit cost at 5.0 times the default when the number of downloads is in the top 10. This configuration can motivate users to generate heating profiles with higher rankings, that is, heating profiles liked by more users. Better heating profiles are generated and a better quality of user experience will be expected for all users as a result.

### (7) Seventh variant example

A selling price may be set for heating profiles. In this case, the terminal device 200 is able to download a heating profile after payment of a purchase price corresponding to the set selling price has been completed.

The server 300 may set the selling price according to predetermined criteria.

The server 300 may set the selling price of the heating profile on the basis of the ranking of that heating profile. As an example, the server 300 may set a higher selling price for a higher ranking assigned to the heating profile.

The server 300 may set the selling price of the heating profile on the basis of the user who generated that heating profile. As an example, the server 300 may set a higher selling price when the user who generated the heating profile is a master user, and may set a lower selling price when the user who generated the heating profile is a customizing user.

The server 300 may set the selling price of the heating profile on the basis of the user downloading that heating profile. As an example, the server 300 may set a low selling price for users with a high download frequency.

An example of criteria for setting the selling price was described above. The server 300 may set the selling price of heating profiles by combining two or more of these criteria.

The server 300 may of course set a fixed selling price. For example, the server 300 may also set the same selling price uniformly for all heating profiles.

The server 300 may calculate the reward granted to a user who generated a heating profile, based on total sales of that heating profile, instead of or as well as the usage history and download history of the heating profile. For example, the server 300 first of all calculates the total sales by multiplying the selling price by the number of downloads. The server 300 may then grant a percentage of the total sales of the heating profile to the user who generated that heating profile. This configuration can motivate users to generate more saleable heating profiles, that is, heating profiles liked by more users. Better heating profiles are generated and a better quality of user experience will be expected for all users as a result.

### <4. Supplement>

Although preferred embodiments of the present disclosure have been described in detail above with reference to the accompanying drawings, the present disclosure is not limited to such examples. It is obvious that a person having an ordinary level of knowledge in the technical field to which the present disclosure belongs could conceive of various modified examples or variations within the scope of the technical concepts set forth in the claims, and these modified examples and variations will naturally be understood to fall within the technical scope of the present disclosure.

Although the embodiments above described an example in which the generating user ID is included in the meta-information, the present disclosure is not limited to such an example. Instead of the generating user ID being included in the meta-information, the server 300 may store the profile ID and the generating user ID in association with each other. In this case, the server 300 calculates the user-based reward by referring to the correspondence relationship between the profile ID and the generating user ID. More specifically, the server 300 calculates a value obtained by aggregating the heating profile-based rewards corresponding to a profile ID stored in association with the same generating user ID, as the reward granted to the user corresponding to that generating user ID.

As mentioned in the embodiments above, the means for heating the aerosol source may be induction heating. In this case, the temperature of heating of the aerosol source controlled on the basis of the heating profile is the temperature of the susceptor. The temperature of the susceptor can be estimated on the basis of the electrical resistance value of the electromagnetic induction source.

The embodiments above described an example in which a parameter relating to the temperature at which the aerosol source is heated, as defined in the heating profile, is the target temperature of the heating unit 121, but the present disclosure is not limited to such an example. The electrical resistance value of the heating unit 121 may be cited as a parameter relating to the temperature at which the aerosol source is heated, in addition to the actual temperature of the heating unit 121 described in the embodiment above. Furthermore, when the means for heating the aerosol source is induction heating, a target value such as the temperature of a susceptor or the electrical resistance value of an electromagnetic induction source may be cited as a parameter relating to the temperature at which the aerosol source is heated, as defined in the heating profile.

The embodiment above described an example in which the inhalation device 100 generates the aerosol by heating the stick-type substrate 150, but the present disclosure is not limited to such an example. The inhalation device 100 may equally be configured as what is known as a liquid atomization aerosol-generating device, which generates an aerosol by heating and atomizing a liquid aerosol source. The features of the present disclosure may also be applied to a liquid atomization aerosol-generating device.

As described above, the heating profile may be generated by means of the terminal device 200. Here, the terminal device 200 generating a heating profile may also refer to a native application installed on the terminal device 200 generating the heating profile. Furthermore, the terminal device 200 generating a heating profile may also refer to PWA (progressive web apps) provided for the terminal device 200 generating the heating profile. Here, the server 300 may be the PWA provider. That is to say, the server 300 generating a heating profile may also refer to PWA (progressive web apps) provided for the terminal device 200 generating the heating profile.

It should be noted that the series of processes performed by each device described in the present description may be realized by using software, hardware, and any combination of software and hardware. Programs constituting the software are prestored on a recording medium (more specifically, a non-transitory computer-readable storage medium) provided internally or externally to each device, for example. When the programs are then executed, for example, by a computer for controlling each device described in the present description, the programs are read into a RAM and executed by means of a processing circuit such as a CPU. The recording medium is, for example, a magnetic disk, an optical disk, a magneto-optical disk, or a flash memory, etc. Furthermore, the computer programs may be distributed via a network, for example, without the use of a recording medium. Furthermore, the computer may be an application-specific integrated circuit such as ASIC, a general-purpose processor which executes functions by reading software programs, or a computer on a server used for cloud computing, etc. Furthermore, the series of processes performed by each device described in the present description may be processed in a distributed manner by multiple computers.

Furthermore, the processing described using flowcharts and sequence diagrams in the present description need not necessarily be implemented in the order depicted. Some processing steps may be implemented in parallel. Furthermore, additional processing steps may be employed and some processing steps may be omitted.

It should be noted that configurations such as the following also fall within the technical scope of the present disclosure.
(1) An information processing device comprising: a communication unit for sending control information defining parameters relating to a temperature at which an aerosol source is heated, for use by an inhalation device which generates an aerosol by heating the aerosol source, and for receiving a usage history constituting information showing a history of use of the control information by the inhalation device;
   a memory unit for storing the control information sent by the communication unit and the usage history received by the communication unit; and
   a control unit for calculating a reward granted to a user who contributed to generating the control information, based on the usage history stored in the memory unit.
(2) The information processing device as disclosed in (1) above, wherein the usage history includes at least any one of: the number of substrates containing an aerosol source that were heated on the basis of the control information; the number of puffs taken during heating based on the control information; timing of puffs; and duration of puffs taken during heating based on the control information.
(3) The information processing device as disclosed in (1) or (2) above, wherein the control unit calculates the reward granted to a user who contributed to generating the control information, based on a ranking assigned to the control information from a predetermined perspective.
(4) The information processing device as disclosed in (3) above, wherein the control unit determines the ranking of the control information on the basis of at least any of: the usage history of the control information, a history of sending/receiving of the control information, and an evaluation of the control information.
(5) The information processing device as disclosed in any one of (1) to (4) above, wherein the memory unit stores the sending/receiving history which shows the history of sending/receiving of the control information, and
   the control unit calculates the reward granted to a user who contributed to generating the control information, based on the history of sending/receiving of the control information stored in the memory unit.
(6) The information processing device as disclosed in (5) above, wherein the history of sending/receiving of the control information includes at least either of the number of times that the control information was sent/received, and the number of users using devices that received the control information.
(7) The information processing device as disclosed in any one of (1) to (6) above, wherein the control unit calculates the reward granted to a user who contributed to generating the control information, based on rights relating to generation of the control information which have been granted to a user who contributed to generating the control information.
(8) The information processing device as disclosed in any one of (1) to (7) above, wherein the control unit calculates the reward granted to a user who contributed to generating the control information, based on total sales of the control information.
(9) The information processing device as disclosed in (8) above, wherein the control unit determines a selling price of the control information on the basis of: a ranking assigned to the control information from a predetermined perspective, the user who contributed to generating the control information, or the user who is using a device which received the control information.
(10) The information processing device as disclosed in any one of (1) to (9) above, wherein the inhalation device uses control information received from a device used by another user, and
   the control unit calculates the reward granted to said other user who is using the device which was the sender of the control information.
(11) The information processing device as disclosed in any one of (1) to (10) above, wherein the memory unit stores, in association with each other, the control information, first identification information for identifying a user who contributed to generating the control information, and second identification information for identifying the control information.
(12) An information processing method comprising: storing control information defining parameters relating to a temperature at which an aerosol source is heated, for use by an inhalation device which generates an aerosol by heating the aerosol source;
   sending the stored control information;
   receiving a usage history constituting information showing a history of use of the control information by the inhalation device;
   storing the received usage history; and
   calculating, by means of a control unit, a reward granted to a user who contributed to generating the control information, based on the stored usage history.

### REFERENCE SIGNS LIST

1 System
100 Inhalation device
111 Power source unit
112 Sensor unit
113 Notification unit
114 Memory unit
115 Communication unit
116 Control unit
121 Heating unit
140 Accommodating portion
141 Internal space
142 Opening
143 Bottom portion
144 Heat insulating portion
150 Stick-type substrate
151 Substrate portion
152 Mouthpiece portion
200 Terminal device
210 Input unit
220 Output unit
230 Detection unit
240 Communication unit
250 Memory unit
260 Control unit
300 Server
310 Communication unit
320 Memory unit
330 Control unit
900 Network

## Claims

1. An information processing device comprising: a communication unit for sending control information defining parameters relating to a temperature at which an aerosol source is heated, for use by an inhalation device which generates an aerosol by heating the aerosol source, and for receiving a usage history constituting information showing a history of use of the control information by the inhalation device;
a memory unit for storing the control information sent by the communication unit and the usage history received by the communication unit; and
a control unit for calculating a reward granted to a user who contributed to generating the control information, based on the usage history stored in the memory unit.

2. The information processing device as claimed in claim 1, wherein the usage history includes at least any one of: the number of substrates containing an aerosol source that were heated on the basis of the control information; the number of puffs taken during heating based on the control information; timing of puffs; and duration of puffs taken during heating based on the control information.

3. The information processing device as claimed in claim 1 or 2, wherein the control unit calculates the reward granted to a user who contributed to generating the control information, based on a ranking assigned to the control information from a predetermined perspective.

4. The information processing device as claimed in claim 3, wherein the control unit determines the ranking of the control information on the basis of at least any of: the usage history of the control information, a history of sending/receiving of the control information, and an evaluation of the control information.

5. The information processing device as claimed in any one of claims 1 to 4, wherein the memory unit stores the sending/receiving history which shows the history of sending/receiving of the control information, and
the control unit calculates the reward granted to a user who contributed to generating the control information, based on the history of sending/receiving of the control information stored in the memory unit.

6. The information processing device as claimed in claim 5, wherein the history of sending/receiving of the control information includes at least either of the number of times that the control information was sent/received, and the number of users using devices that received the control information.

7. The information processing device as claimed in any one of claims 1 to 6, wherein the control unit calculates the reward granted to a user who contributed to generating the control information, based on rights relating to generation of the control information which have been granted to a user who contributed to generating the control information.

8. The information processing device as claimed in any one of claims 1 to 7, wherein the control unit calculates the reward granted to a user who contributed to generating the control information, based on total sales of the control information.

9. The information processing device as claimed in claim 8, wherein the control unit determines a selling price of the control information on the basis of: a ranking assigned to the control information from a predetermined perspective,
the user who contributed to generating the control information, or the user who is using a device which received the control information.

10. The information processing device as claimed in any one of claims 1 to 9, wherein the inhalation device uses control information received from a device used by another user, and
the control unit calculates the reward granted to said other user who is using the device which was the sender of the control information.

11. The information processing device as claimed in any one of claims 1 to 10, wherein the memory unit stores, in association with each other, the control information, first identification information for identifying a user who contributed to generating the control information, and second identification information for identifying the control information.

12. An information processing method comprising: storing control information defining parameters relating to a temperature at which an aerosol source is heated, for use by an inhalation device which generates an aerosol by heating the aerosol source;
sending the stored control information;
receiving a usage history constituting information showing a history of use of the control information by the inhalation device;
storing the received usage history; and
calculating, by means of a control unit, a reward granted to a user who contributed to generating the control information, based on the stored usage history.
